# EUROPEAN PATENT SPECIFICATION

(11) **EP 0 667 744 B1**
(45) Date of publication and mention of the grant of the patent: **30.07.1997**
(21) Application number: 94900089.7
(22) Date of filing: 03.11.1993
(51) Int. Cl.: A21C 11/20, A21C 3/04

(54) **METHOD AND AN APPARATUS FOR MAKING PASTA, GNOCCHI, AND THE LIKE ON A CONTINUOUS BASIS**
VERFAHREN UND VORRICHTUNG ZUR KONTINUIERLICHEN HERSTELLUNG VON PASTA, GNOCCHI UND DERGLEICHEN
PROCEDE ET APPAREIL DE FABRICATION EN CONTINU DE PATES, GNOCCHI ET ANALOGUES

(30) Priority: 05.11.1992 IT MI922546
(43) Date of publication of application: 23.08.1995
(73) Proprietor: Robotica Alimentare S.p.A., 38100 Trento (IT)
(72) Inventor: VEZZANI, Pompeo, I-20144 Milano (IT)
(74) Representative: Alagem Modiano, Lara S.
(86) International application number: EP9303074
(87) International publication number: WO9409632

(56) References cited:
- EP-A- 0 050 409
- DE-A- 2 241 240
- FR-A- 2 470 544
- FR-A- 2 605 498

## Description

This invention concerns a method and related apparatus for making pasta, gnocchi or the like products on a continuous basis.

Methods have been known for producing gnocchi commercially, which usually consist of providing a dough formed by mixing together flour, water and salt, and cooking the dough by mechanical working (kneading) and gradual application of heat until a temperature of 80° to 90°C is reached at which swelling and gelling of the flour starch contents takes place. Such mechanical working and temperature are maintained until all the starch in the dough has gelled. To promote gelling, water is usually employed in the kneading process at a temperature of about 90°C. After kneading and cooking, the dough is transferred to the following forming step, which is usually accomplished by extrusion through a die appropriate to deliver small cylindrical blanks which are then cut to a desired length and optionally squeezed into the typical configuration of gnocchi products.

Such prior methods, such as disclosed in document FR-A-2 605 498, exhibit a number of drawbacks.

In fact, in the transition from the kneading machine to the forming machine, the gelled dough unavoidably undergoes a degree of cooling which results in a static downgrading of its amylaceous texture which is proportional to the dough cooking temperature, the residence time, and the amount of dough cooling between the cooking machine and the forming machine.

The subsequent mechanical action of the extruder auger causes a breakdown in the dough bearing frame (lattice formed by the gelled starch) as weakened by downgrading. Consequently to this, the dough acquires an amorphous (non-viscoelastic) consistency, thereby loosing the soft character attained through the cooking step and, therefore, sharply departing from those features which have long come to be appreciated in this product when homemade.

In order to prevent excessive downgrading of the dough, a rise in temperature during the cooking step could be envisaged, but a cooking temperature above 90°C would bring about a quick and irreversible alteration of the product organoleptic and nutritional properties.

Another drawback exhibited by conventional gnocchi making methods is that they involve a relatively large number of items of equipment (scale, kneader, gnocchi former, shaker, lifter, sifter) which scatter dust in large amounts all-around during their operation, which dust, additionally to extending the cleaning time, may cause physical problems with their operators, specifically the respiratory tracts and teeth thereof.

A further drawback is that the arrangements used to implement conventional methods require continued attendance by an operator and labor for cleaning the machinery, which must be partly disassembled, and then washed and dried to prevent mildew.

As is known, pasta is usually prepared by extruding a raw dough composed of flour, water and salt. Commercially made pasta has smooth surfaces and is fully de-aerated, i.e. it has significantly different features from pasta made by hand or using household utensils. Homemade pasta has, in fact, a body texture which traps air inside micro-receptacles therein, and porous surfaces to which the sauce will cling when serving.

Also known are methods for preparing pre-cooked pasta, to be cooked to completion within a shortened time at the moment it is consumed. Such methods basically consist of subjecting conventionally made pasta to a partial cooking step in a specially provided apparatus. Here again, the characteristic texture of commercial pasta departs radically from that of homemade pasta.

The problem underlying the present invention is that of providing a method which enables pasta and gnocchi having features closely resembling those of homemade pasta and gnocchi to be produced continuously, while obviating the aforementioned drawbacks with which conventional methods are beset.

This problem is solved, according to the invention, by a method for making pasta, gnocchi and the like food products on a continuous basis which is characterized in that it comprises hydrating at a controlled temperature and kneading a gelled flour, and continuously extruding the resultant dough through an extrusion head to form pasta, gnocchi or the like.

Further features and advantages of the invention will become more clearly apparent from the description of two preferred, though not exclusive, embodiments of the inventive method, as well as of an apparatus for its implementation, illustrated by way of example and not of limitation by the accompanying drawings, in which:
Figure 1 schematically shows a first embodiment of an apparatus for carrying out the method of this invention; and
Figure 2 schematically shows a second embodiment of an apparatus for carrying out the method of this invention.

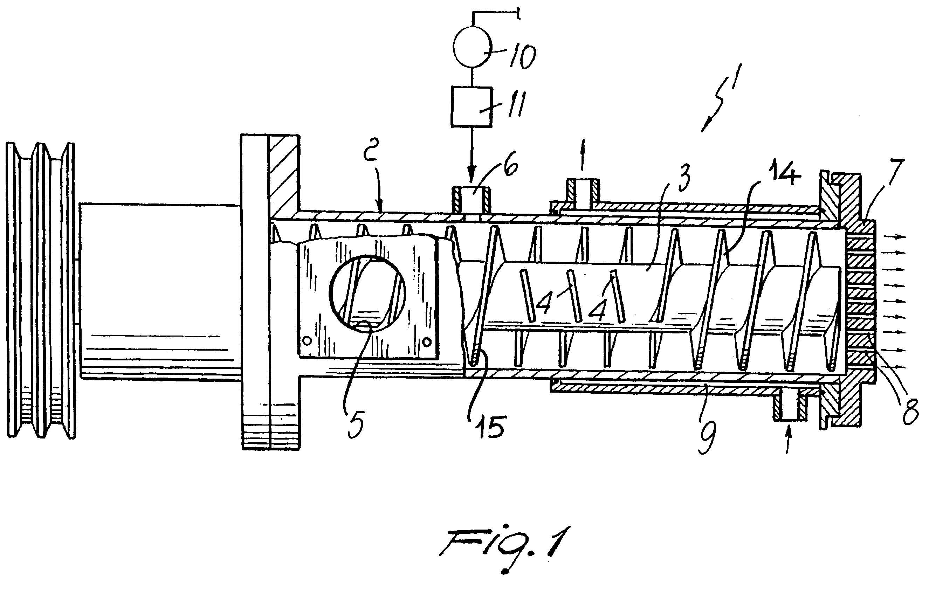

Shown in Figure 1 is an apparatus for making pasta products, such as spaghetti, noodles or the like, by the method of this invention.

This apparatus is generally denoted by the reference numeral 1 and comprises a vessel 2 having a cylindrical shape and carrying on its interior a shaft 3 which is arranged to lie coaxially with the vessel and provided with a plurality of adjustable radial paddles 4. The vessel 2 is formed near one end with a first opening 5 and a second opening 6 to allow pre-cooked, or gelled, flour and water, respectively, to be introduced into the vessel.

At the other end, the vessel 2 carries an extrusion head 7 provided with plural holes 8 having corresponding configurations to the type of pasta product sought.

The shaft 3 is powered, in a manner known per se, to perform the gelled flour kneading with water and urge the resultant dough toward the extrusion head 7. In the proximity of the extrusion head 7 and the openings 5 and 6, the radial paddles 4 "merge" together into respective augers 14, 15 to produce the thrust force required to move forward and extrude out the dough.

On the middle section of the shaft 3, the paddles 4 are shaped and oriented as appropriate for optimum rate of advance of the dough through the vessel 2.

Arranged at least around a section of the vessel 2 -- in the example shown, a section lying next to the extrusion head 7 -- is a jacket 9 which is supplied with a fluid, preferably water, at a set temperature to bring and maintain the dough to the desired temperature.

Advantageously, the opening 6 is connected to a feed pump 10 operative to supply the vessel 2 with water at the desired temperature through a heat exchanger 11.

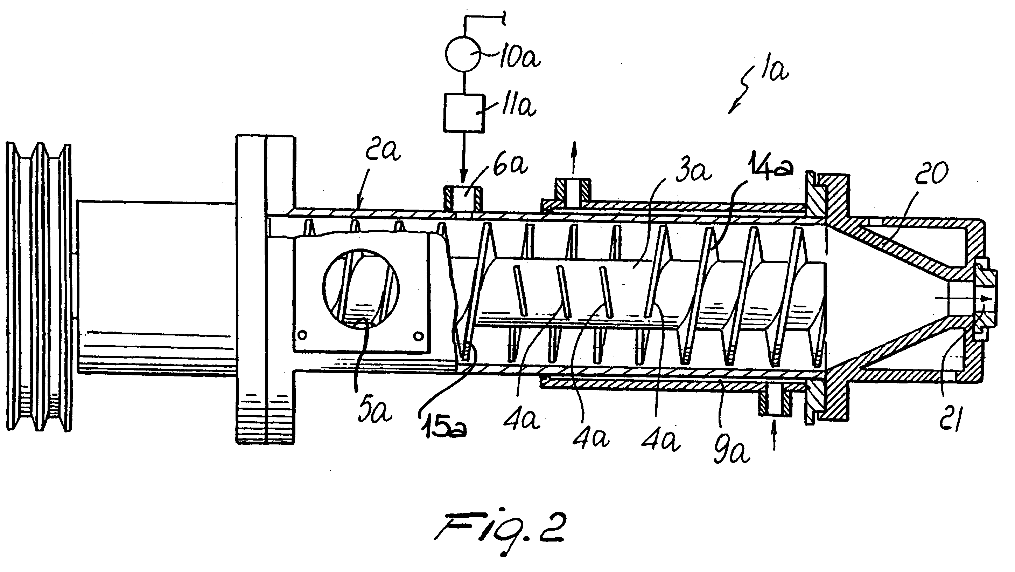

Shown in Figure 2 is an apparatus, generally denoted by the reference character 1a, suitable for use in the inventive method where gnocchi are to be produced.

The apparatus 1a includes elements which are similar to those previously described in connection with Figure 1, and it is on this account that they have been identified with the same reference numerals followed by a character "a", and no further described herein.

Unlike the apparatus shown in Figure 1, the apparatus 1a includes, located at one of its ends, an extrusion head 20 having a single central hole 21, whereby it will deliver a continuous, e.g. cylindrical, extruded blank of the dough which is then cut to size using conventional devices, not shown, to yield gnocchi.

The apparatus 1 would also have a conventional segmenting device linked operatively thereto to cut the extrudate into pieces of a desired length.

The method of this invention consists basically of introducing an amount of gelled, or pre-cooked flour into the vessel 2, with the term "flour" being used herein to indicate any suitable powdered starchy material for making pasta and gnocchi products, including maize meal, and adapted to be hydrated and kneaded by the addition of water, preferably in nebulized form, into the vessel 2.

Where the pasta or gnocchi are intended for consumption directly after making them, the water temperature would be kept preferably within the 40° to 70°C range, whereas when the pasta or gnocchi are to be packaged and stored, the hydrating water temperature would preferably be in the range of 18° to 25°C.

The action of the paddles 4 is effective to ensure full hydration and kneading of the flour and its extrusion through the extrusion head 7 or 20 to yield pasta or gnocchi products. It should be noted that the rate of advance of the dough through the vessel 2 or 2a would be selected to ensure optimum kneading, and that the configuration and orientation of the paddles 4, 4a would be selected to impart said optimum advance rate to the dough.

Where the pasta or gnocchi are intended for direct consumption, the product leaving the extrusion head may be swept with jetted water at a temperature in the preferred range of 80° to 85°C using a conventional spray nozzle, not shown for simplicity.

On the other hand, where the pasta or gnocchi are for later consumption, a drying apparatus and packaging apparatus may be provided downstream from the apparatus 1, 1a.

In the latter case, a flour dispenser may also be provided on the outlet side of the vessel 2, 2a which would be of the same type as that employed to prepare the dough, to sprinkle flour over the product and prevent it from becoming stuck, with the unused flour being then returned to the vessel 2, 2a through the opening 5 such that the sprinkle flour will only contact the product once and microbiological contamination of the product be avoided.

In order to wash the vessel 2, 2a clean, it will suffice to introduce plain water into it, operate the shaft 3 at high rpm, and dry the vessel by means of a stream of heated air after draining off the flushing water.

The pasta or gnocchi yielded by the method of this invention are cooked to perfection and ready for consumption at once, or at some later time after dipping them in hot water for just as long as required to have them heated.

In addition, the pasta or gnocchi products thus obtained exhibit a body texture encapsulating air in micro-receptacles thereof, and a surface porosity which effectively retains a sauce used, namely highly appreciated features which can only be found in home-or artisan-made products.

It has been practically ascertained that the method of this invention does achieve its objective by providing a product which is very easy to digest and has organoleptic and nutritional characteristics closely approximating those of homemade products.

A further advantage is that it can be carried out on a compact equipment adapted for use in vending machines, in a most satisfactory condition from the standpoint of sanitation.

Still another advantage is that an apparatus has been provided which is simple construction-wise, compares favorably with prior art apparatus, and can be switched from the gnocchi to the pasta making mode merely by replacing its extrusion head.

The foregoing method, as well as the apparatus for implementing it, are susceptible to change and modification in various ways within the scope of the same inventive concept; further, all the details may be replaced with technical equivalents thereof.

In putting the invention into practice, the materials used, and the dimensions, may be any appropriate ones to fill individual demands and suit the state of the art.

## Claims

1. A method for making pasta, gnocchi and the like food products on a continuous basis, characterized in that it comprises hydrating at a controlled temperature and kneading a gelled flour, and continuously extruding the resultant dough through an extrusion head to form pasta, gnocchi or the like.

2. A method according to Claim 1, wherein the hydration step is carried out using water at a temperature substantially within the range of 18°C to 25°C.

3. A method according to Claim 1, wherein the hydration step is carried out using water at a temperature substantially within the range of 40°C to 70°C.

4. A method according to one or more of the preceding claims, wherein following the extrusion step, the product is subjected to the action of jetted water at a temperature substantially within the range of 80°C to 85°C.

5. A method according to one or more of the preceding claims, wherein the extruded product is sprinkled with flour of the same kind as that used to form the dough, the excess flour being returned to the formation of said dough.

6. A method according to one or more of the preceding claims, wherein the hydration and kneading steps are carried out inside a vessel substantially cylindrical in shape, with the dough being driven progressively along the axis of said vessel, said vessel including a dough extruding head located at the end at which the dough arrives.

7. A method according to one or more of the preceding claims, wherein the hydration water is introduced into said vessel in nebulized form.

8. A method according to any of claims 6 and 7, characterized in that it comprises the steps of:
- providing a cylindrical vessel (2) supporting a power driven shaft (3) on its interior, which shafts extends axially with respect to said vessel (2) and carries radial paddles (4), near one end of said vessel there being provided at least one inlet opening (5,6), and near the other end there being provided an extrusion head (7), said radial paddles (4) defining, in the proximities of said extrusion head (7) and said at least one inlet opening (5,6), respective feed and extrusion augers (14,15,14a,15a),
- introducing a gelled flour and water into the vessel (2),
- hydrating and kneading said gelled flour at a controlled temperature, by the action of the paddles (4) and of the feed augers (14,14a), in order to obtain a dough,
- causing the dough to progressively advance through the vessel (2), to be continuously extruded through the extrusion head (7) by virtue of the thrust force exerted by the extrusion augers (15,15a), and to form pasta, gnocchi or the like.

9. A method according to claim 8, wherein a jacket (9) supplied with a fluid at a set temperature is provided around at least a portion of said vessel (2).

10. A method according to any of claims 8 and 9, wherein said extrusion head (7) has a plurality of holes (8) for forming pasta products.

11. A method according to any of claims 8 to 10, wherein said extrusion head (7) has a single hole (21) for forming gnocchi products.

12. A method according to any of claims 8 to 11, wherein two openings (5,6,5a,6a) are provided near an end of said vessel (2) for introducing liquid and solid ingredients, respectively, into said vessel.

13. A method according to any of claims 8 to 12, wherein said radial paddles are adjustable.

## Patentansprüche

1. Verfahren zum kontinuierlichen Herstellen von Teigwaren, Gnocchi und ähnlichen Nahrungsmitteln, dadurch **gekennzeichnet**, daß es das Versetzen mit Wasser bei gesteuerter Temperatur und das Kneten eines verkleisterten Mehles sowie das kontinuierliche Extrudieren des so erhaltenen Teiges durch einen Extruderkopf zum Herstellen von Teigwaren, Gnocchi oder dergleichen umfaßt.

2. Verfahren nach Anspruch 1, wobei zum Durchführen des Wasserzugabeschrittes Wasser verwendet wird, dessen Temperatur im wesentlichen im Bereich von 18°C bis 25°C liegt.

3. Verfahren nach Anspruch 1, wobei zum Durchführen das Wasserzugabeschrittes Wasser verwendet wird, dessen Temperatur im wesentlichen im Bereich von 40°C bis 70°C liegt.

4. Verfahren nach einem oder mehreren der vorhergehenden Ansprüche, wobei das Erzeugnis nach dem Extrudierschritt mit Wasser besprüht wird, dessen Temperatur im wesentlichen im Bereich von 80°C bis 85°C liegt.

5. Verfahren nach einem oder mehreren der vorhergehenden Ansprüche, wobei das extrudierte Erzeugnis mit dem gleichen Mehl bestäubt wird, das zur Herstellung des Teiges verwendet wird, und wobei das überschüssige Mehl wieder der Herstellung des Teiges zugeführt wird.

6. Verfahren nach einem oder mehreren der vorhergehenden Ansprüche, wobei die Schritte des Versetzens mit Wasser und des Knetens in einem im wesentlichen zylinderförmigen Behälter durchgeführt werden, wobei der Teig allmählich entlang der Achse des Behälters gefördert wird, und wobei der Behälter an dem Ende, an dem der Teig ankommt, einen Teigextruderkopf hat.

7. Verfahren nach einem oder mehreren der vorhergehenden Ansprüche, wobei das zugegebene Wasser in vernebelter Form in den Behälter eingebracht wird.

8. Verfahren nach einem der Ansprüche 6 und 7, dadurch **gekennzeichnet**, daß es die folgenden Schritte enthält:
- Vorsehen eines zylindrischen Behälters (2), der in seinem Inneren eine motorgetriebene Welle (3) hat, die sich axial zum Behälter (2) erstreckt und radiale Schaufeln (4) trägt, wobei nahe einem Ende des Behälters mindestens eine Einlaßöffnung (5, 6) und nahe dem anderen Ende ein Extruderkopf (7) vorgesehen ist, und wobei die radialen Schaufeln (4) in der Nachbarschaft des Extruderkopfes (7) und in der Nachbarschaft der mindestens einen Einlaßöffnung (5, 6) eine Förder- bzw. eine Extruderschnecke (14, 15, 14a, 15a) bilden,
- Einbringen von verkleistertem Mehl und Wasser in den Behälter (2),
- Versetzen mit Wasser und Kneten des verkleisterten Mehles bei gesteuerter Temperatur durch die Einwirkung der Schaufeln (4) und der Förderschnecke (14, 14a) zum Herstellen eines Teiges,
- allmähliches Fördern des Teiges durch den Behälter (2) zum kontinuierlichen Extrudieren durch den Extruderkopf (7) mittels der von der Extruderschnecke (15, 15a) ausgeübten Schubkraft zum Herstellen von Teigwaren, Gnocchi oder dergleichen.

9. Verfahren nach Anspruch 8, wobei zumindest ein Teil des Behälters (2) eine Ummantelung (9) hat, der ein Fluid mit vorbestimmter Temperatur zugeführt wird.

10. Verfahren nach einem der Ansprüche 8 und 9, wobei der Extruderkopf (7) eine Vielzahl von Löchern (8) zum Herstellen von Teigwaren hat.

11. Verfahren nach einem der Ansprüche 8 bis 10, wobei der Extruderkopf (7) ein einziges Loch (21) zum Herstellen von Gnocchi-Erzeugnissen hat.

12. Verfahren nach einem der Ansprüche 8 bis 11, wobei nahe einem Ende des Behälters (2) zwei Öffnungen (5, 6, 5a, 6a) vorgesehen sind, um flüssige bzw. feste Zutaten in den Behälter einzubringen.

13. Verfahren nach einem der Ansprüche 8 bis 12, wobei die radialen Schaufeln verstellbar sind.

## Revendications

1. Procédé pour la fabrication de pâtes, gnocchi et produits alimentaires analogues en continu, caractérisé en ce qu'il comprend une hydratation à température commandée et un malaxage de farine gélifiée, et une extrusion en continu de la pâte résultante au travers d'une tête extrudeuse pour former des pâtes, des gnocchi ou analogues.

2. Procédé selon la revendication 1, dans lequel l'étape d'hydratation est effectuée en utilisant de l'eau à une température sensiblement comprise dans la plage entre 18 °C et 25 °C.

3. Procédé selon la revendication 1, dans lequel l'étape d'hydratation est effectuée en utilisant de l'eau à une température sensiblement comprise dans la plage entre 40 °C et 70 °C.

4. Procédé selon l'une ou plusieurs des revendications précédentes, dans lequel à la suite de l'étape d'extrusion, le produit est soumis à l'action d'un jet d'eau à une température sensiblement comprise dans la plage entre 80 °C et 85 °C.

5. Procédé selon l'une ou plusieurs des revendications précédentes, dans lequel le produit extrudé est saupoudré avec de la farine de la même sorte que celle utilisée pour faire la pâte, la farine en excès étant renvoyée pour l'élaboration de ladite pâte.

6. Procédé selon l'une ou plusieurs des revendications précédentes, dans lequel les étapes d'hydratation et de malaxage sont effectuées à l'intérieur d'un récipient de forme sensiblement cylindrique, la pâte étant entraînée progressivement le long de l'axe dudit récipient, ledit récipient comprenant une tête extrudeuse de pâte située à l'extrémité à laquelle la pâte est amenée.

7. Procédé selon l'une ou plusieurs des revendications précédentes, dans lequel l'eau d'hydratation est introduite à l'intérieur dudit récipient sous forme vaporisée.

8. Procédé selon l'une quelconque des revendications 6 et 7, caractérisé en ce qu'il comprend les étapes consistant à :
- prévoir un récipient cylindrique (2) supportant en son sein un arbre commandé par moteur (3), lequel arbre s'étend axialement par rapport audit récipient (2) et porte des ailettes radiales (4) près d'une extrémité dudit récipient où il est prévu au moins une ouverture d'introduction (5, 6), et près de l'autre extrémité où il est prévu une tête extrudeuse (7), lesdites ailettes radiales (4) définissant respectivement, à proximité de ladite tête extrudeuse (7) et de ladite au moins une ouverture d'introduction (5, 6), des vis d'Archimède d'alimentation et d'extrusion (14, 15, 14a, 15a),
- introduire de la farine gélifiée et de l'eau à l'intérieur du récipient (2),
- hydrater et malaxer ladite farine gélifiée à une température commandée, sous l'action des ailettes (4) et des vis d'Archimède d'alimentation (14, 14a), afin d'obtenir une pâte,
- amener la pâte à avancer progressivement au travers du récipient (2), pour être extrudée en continu au travers de ladite tête extrudeuse (7) en raison de la force de poussée exercée par les vis d'Archimède d'extrusion (15, 15a), et de former des pâtes, des gnocchi ou analogues.

9. Procédé selon la revendication 8, dans lequel une chemise (9) alimentée par un fluide à une température déterminée est disposée autour d'au moins une partie dudit récipiént (2).

10. Procédé selon l'une quelconque des revendications 8 et 9, dans lequel ladite tête extrudeuse (7) comporte plusieurs trous (8) pour former des pâtes.

11. Procédé selon l'une quelconque des revendications 8 à 10, dans lequel ladite tête extrudeuse (7) comporte un seul trou (21) pour former des gnocchi.

12. Procédé selon l'une quelconque des revendications 8 à 11, dans lequel deux ouvertures (5, 6, 5a, 6a) sont prévues près d'une extrémité dudit récipient (2) pour introduire respectivement des ingrédients liquides et solides à l'intérieur du récipient.

13. Procédé selon l'une quelconque des revendications précédentes dans lequel lesdites ailettes radiales sont réglables.
